(19) Europäisches Patentamt
European Patent Office
Office européen des brevets

(11) Publication number : **0 496 163 A1**

(12) # EUROPEAN PATENT APPLICATION

(21) Application number : **91311698.4**

(22) Date of filing : **17.12.91**

(51) Int. Cl.$^5$ : **C08G 59/10,** C09D 163/00, C09D 5/03

(30) Priority : **24.12.90 GB 9028037**

(43) Date of publication of application : **29.07.92 Bulletin 92/31**

(84) Designated Contracting States : **AT BE CH DE DK FR GB IT LI NL SE**

(71) Applicant : **THE DOW CHEMICAL COMPANY**
**2030 Dow Center Abbott Road**
**Midland, MI 48640 (US)**

(72) Inventor : **Klein, Dieter H.**
**Draisstrasse 6**
**W-7587 Rheinmunster (DE)**
Inventor : **Harrison, Peter**
**Alemannenstrasse**
**W-7570 Baden-Baden (DE)**

(74) Representative : **Raynor, John et al**
**W.H. Beck, Greener & Co 7 Stone Buildings**
**Lincoln's Inn**
**London WC2A 3SZ (GB)**

(54) **Stable amine advanced epoxy resin compositions.**

(57) The invention is an advanced epoxy resin comprising the reaction product of a reaction mixture comprising : A. a polyepoxide ; B. a sterically hindered amine an advancement agent which corresponds to one of Formulas 1 or 2 described hereinafter ; C. optionally, a catalyst for the reaction of the polyepoxide with the advancement agent ; D. and optionally, a dihydroxy hydrocarbon, or a halogenated dihydroxy hydrocarbon.

In another embodiment the invention is a water dispersed amine advanced epoxy resin comprising

i). the reaction product of A. a polyepoxide, B. an amine advancement agent corresponding to Formulas 1, 2 or 17, C. optionally, a catalyst for the reaction of the polyepoxide with the advancement agent ; D. and optionally, a dihydroxy hydrocarbon, or a halogenated dihydroxy hydrocarbon.

ii) a dispersant,

iii) optionally, a coupling solvent ; and

iv) water.

In another embodiment the invention is a process for preparing the amine advanced epoxy resins of this invention in a water dispersion.

EP 0 496 163 A1

This invention relates to advanced epoxy resin compositions which are advanced with amines and are stable at elevated temperatures. The invention further relates to cured epoxy resins containing such advanced epoxy resins. The invention further relates to coatings prepared from such compositions and to materials coated with or encapsulated in such resin compositions. The invention further relates to laminates, prepregs, encapsulated materials and composites prepared from such resin compositions.

Commercially most advanced epoxy resins are prepared by reacting a polyepoxide, such as diglycidyl ether of bisphenol A, with a dihydroxy hydrocarbon, such as bisphenol A. It is desired to advance such resins with amine advancement agents as such agents would result in a resin with better adhesive properties and higher glass transition temperature. These resins are primarily found in a linear polymeric form which allows the advanced resin to be processed to prepare films, coatings and parts. If the advanced resin cannot be processed it may no longer be useful.

Such advanced epoxy resins are generally reacted in batch reactions at high temperatures over several hours. One use of epoxy resins is for powder coatings. In order for the advanced resins to be made into powder form the molten resin is slowly placed on a belt upon which the resin freezes and is ground up to form flakes or powder. A large part of the resin must be kept in the reaction pot for a significant period of time at high temperatures. If the resin is not stable at such temperatures the resin may crosslink and gel. It is well known that the use of an amine to advance an epoxy resin results in the formation of tertiary amine moieties along the backbone of the polymer. Such amine moieties catalyze the reaction of epoxy moieties with one another resulting in crosslinking of the resin, and thereby reducing the stability of the resins and their usefulness.

Lantz U.S. Patent 3,538,039 discloses heat curable compositions which comprise (1) an adduct of a polyepoxide and amine, (2) a polyfunctional anhydride and (3) an activator for the anhydride (imidazole). The adduct is preferably an adduct of a liquid glycidyl polyether of a polyhydric phenol and an aminophenol.

Landau U.S. Patent 3,518,220 discloses a heat curable composition comprising (1) an adduct of a polyepoxide and amine (2) and 3-aminopyridine. The polyepoxide and the amine adduct are not stable at high temperatures over extended period of time and thus are not suitable for use in powder coatings.

What is needed is an amine advancement agent which will not catalyze the crosslinking of the epoxy resin. What is further needed is a stable amine advanced epoxy resin.

The invention is an advanced epoxy resin comprising the reaction product of a reaction mixture comprising:

A. a polyepoxide;

B. an advancement agent which corresponds to formula 1 or 2;

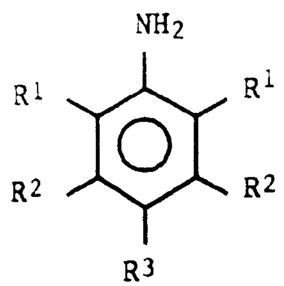

1

$$R^5 - NH - R^4 - NH - R^5 \qquad 2$$

C. optionally, a catalyst for the reaction of the polyepoxide with the advancement agent; and

D. optionally, a dihydroxy hydrocarbon, or a halogenated dihydroxy hydrocarbon; wherein

$R^1$, $R^2$ and $R^3$ are independently in each occurrence hydrogen or a substituent which does not significantly interfere with the reaction of the primary amine with epoxy moieties and which does not catalyze the reaction of an epoxy moiety with another epoxy moiety;

$R^4$ is independently in each occurrence $C_{1-20}$ alkylene, $C_{5-20}$ cycloalkylene or $C_{6-20}$ arylene, wherein such groups may be optionally substituted with a non-interfering group;

$R^5$ is independently in each occurrence $C_{3-20}$ secondary or tertiary alkyl, $C_{5-20}$ cycloalkyl or $C_{6-20}$ aryl group, wherein such groups may be optionally substituted with a non-interfering group;

with the proviso that at least one of $R^1$ must be a non-interfering group, or two of the $R^2$ or $R^3$ designated moieties must be a non-interfering group.

In another embodiment, the invention is the reaction product of the advanced epoxy resin described herein with a known curing agent to give a cured epoxy resin composition.

The advanced epoxy resins of this invention exhibit excellent stability. Further, cured epoxy resins of the invention exhibit increased glass transition temperatures and improved adhesion to metals. In preferred embodiments the advanced epoxy resins of this invention are solid resins with higher softening points than similar resins advanced using conventional advancing agents. Further, the advanced epoxy resins of this invention demonstrate higher melting points at lower epoxy equivalent weights than conventional advanced epoxy resins.

The invention is the discovery of a class of amine advancement agents for epoxy resins which prepare stable advanced epoxy resins. As used herein advanced epoxy resin shall refer to the reaction product of a polyepoxide with an amine as described herein, or a mixture of such an amine with another advancement agent, such as a polyhydroxy hydrocarbon or halogenated polyhydroxy hydrocarbon, to prepare an oligomeric or polymeric product. Such reaction product can be further reacted with a curing agent to form a thermoset product.

With respect to Formula 1, $R^1$, $R^2$ and $R^3$ are independently in each occurrence hydrogen or a substituent which does not significantly interfere with the reaction of the primary amine with epoxy moieties and which does not catalyze the reaction of an epoxy moiety with another epoxy moiety. Further, $R^1$, $R^2$ and $R^3$ should provide sufficient steric hindrance such that after the amine is reacted with a polyepoxide further reaction of the tertiary amine formed is prevented or substantially inhibited. Due to the relative positions of $R^1$, $R^2$ and $R^3$ on the aromatic ring those substituents which satisfy the criteria described herein will be different for each of $R^1$, $R^2$ and $R^3$.

Preferably, $R^1$ is independently in each occurrence hydrogen, $C_{1-4}$ alkyl, $C_{1-4}$ alkyloxy, halo, or nitro. More preferably, $R^1$ is hydrogen, $C_{1-3}$ alkyl, $C_{1-3}$ alkyloxy, bromo, chloro, or nitro. Even more preferably, $R^1$ is hydrogen, methyl, or bromo. Most preferably, $R^1$ is hydrogen or methyl. Preferably, $R^2$ is hydrogen, $C_{1-3}$ alkyl, $C_{1-8}$ alkyloxy, halo, or nitro. More preferably, $R^2$ is hydrogen, $C_{1-2}$ alkyl, $C_{1-2}$ alkyloxy, bromo, chloro, or nitro. Even more preferably, $R^2$ is hydrogen, methyl, or bromo. Most preferably, $R^2$ is hydrogen or methyl. Preferably, $R^3$ is independently in each occurrence hydrogen, $C_{1-3}$ alkyl, $C_{1-8}$ alkyloxy, halo, or nitro. More preferably, $R^3$ is hydrogen, $C_{1-4}$ alkyl, $C_{1-4}$ alkyloxy, bromo, chloro, or nitro. Even more preferably, $R^3$ is hydrogen, $C_{1-4}$ alkyl or bromo. Most preferably, $R^3$ is hydrogen or $C_{1-4}$ alkyl.

At least two of the substituents designated by the variables $R^1$, $R^2$ and $R^3$ must be a non-interfering group such that the tertiary amine formed is sterically hindered so that it is unable to react further or is substantially inhibited from reacting. Preferably, both of $R^1$ are non-interfering substituents, i.e., not hydrogen, or one $R^2$ is a non-interfering substituent, while one of the other $R^2$ or $R^3$ is a non-interfering substituent, where $R^1$ is hydrogen. More preferably, both of $R^1$ are non-interfering substituents, i.e., not hydrogen, or both of $R^2$ are non-interfering substituents, where $R^1$ is hydrogen. Most preferably, both of $R^1$ are non-interfering substituents. Among most preferred advancing agents are 3,5-xylidene and 2,6-xylidene.

With respect to Formula 2, preferably $R^4$ is independently in each occurrence $C_{1-20}$ alkylene, $C_{5-20}$ cycloalkylene, or $C_{6-20}$ arylene group, wherein such groups may be optionally substituted with a non--interfering group. More preferably, $R^4$ is $C_{2-10}$ alkylene, $C_{5-12}$ cycloalkylene or $C_{6-20}$ arylene group, wherein such group may be optionally substituted with an alkyl, alkoxy, halo or nitro group. Even more preferably, $R^4$ is $C_{2-20}$ alkylene, $C_{6-20}$ cycloalkylene or $C_{5-12}$ arylene group, wherein such group may be optionally substituted with an alkyl, alkoxy, halo or nitro moiety. Most preferably, $R^4$ is $C_{2-10}$ alkylene. Preferably, $R^5$ is independently in each occurrence $C_{3-20}$ secondary or tertiary alkyl, $C_{5-20}$ cycloalkyl, or $C_{6-20}$ aryl group, wherein such groups may be optionally substituted with a non-interfering group. More preferably, $R^5$ is $C_{4-20}$ tertiary alkyl, $C_{5-12}$ cycloalkyl or $C_{6-20}$ aryl group, wherein such groups may be optionally substituted with an alkyl, alkoxy, halo or nitro moiety. Even more preferably, $R^5$ is $C_{4-20}$ tertiary alkyl, $C_{5-12}$ cycloalkyl or $C_{6-20}$ aryl group, wherein such group may be optionally substituted with an alkyl alkoxy, halo or nitro group. Most preferably, $R^5$ is $C_{4-10}$ tertiary alkyl. Arylene as used herein includes monocyclic aryl moieties and biarylene moieties wherein the two aryl moieties are connected by a direct bond or a bridging group which may be alkylene, halo substituted alkylene, or cycloalkylene.

The preferred class of advancing agents are the compounds represented by Formula 1.

Polyepoxide as used herein refers to a compound or a mixture of compounds which contains, on average, more than one epoxy moiety per molecule, and includes partially advanced epoxy resins, that is the reaction of one or more polyepoxides and an advancing agent other than the novel advancing agents of this invention, wherein the reaction product has an average of more than one unreacted epoxide unit per molecule.

Polyepoxides (polyglycidyl ethers of a polyhydroxy hydrocarbon) are prepared by reacting an epihalohydrin with a polyhydroxy hydrocarbon or a halogenated polyhydroxy hydrocarbon. The preparation of such compounds is well known in the art. See Kirk-Othmer Encyclopaedia of Chemical Technology 3rd Ed. Vol. 9 pp. 267-289.

The epihalohydrins preferably correspond to Formula 3

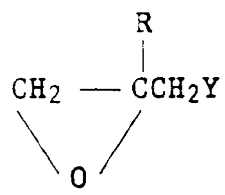

3

wherein Y is a halogen, preferably chloro or bromo, and most preferably chloro; and R is hydrogen or $C_{1-4}$ alkyl, and more preferably methyl.

Polyhydroxy hydrocarbon means herein a compound with a hydrocarbon backbone and more than one primary or secondary hydroxy moieties, preferably two or more. Halogenated polyhydroxy hydrocarbon means herein a compound with a hydrocarbon backbone which is substituted with one or more halogens and more than one, preferably two or more, primary or secondary hydroxy moieties. The hydroxyl moieties may be aromatic aliphatic or cycloaliphatic.

Preferred polyhydroxy hydrocarbons useful in this invention correspond to Formula 4

$$A{(OH)}_u \qquad 4$$

wherein:

A is an aryl moiety; aryl moiety substituted with an alkyl or halo moiety; a polyaryl moiety, wherein the aryl moieties are connected by direct bonds, alkylene, haloalkylene, cycloalkylene, carbonyl, sulfonyl, sulfinyl, oxygen, or sulfur moieties, such polyaryl moieties may be optionally substituted with an alkyl or halo moiety; or the oligomeric reaction product of an aldehyde and phenol;

and u is a positive real number greater than 1.

Among preferred classes of polyhydroxy hydrocarbons and halogenated polyhydroxy hydrocarbons are the bisphenols; halogenated bisphenols; hydrogenated bisphenols; novolac resins, i.e. the reaction product of phenols and simple aldehydes, preferably formaldehyde; and polyalkylene glycols.

Preferred polyhydroxy hydrocarbons, and halogenated polyhydroxy hydrocarbons include those corresponding to Formulas 5 to 8:

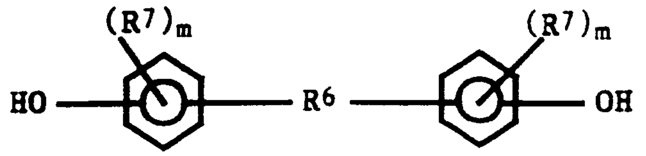 5

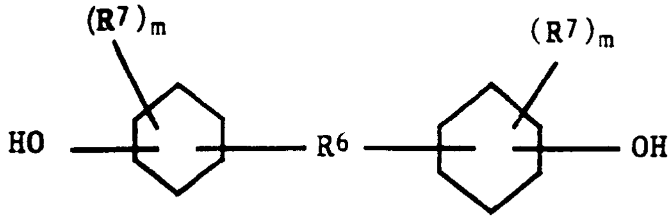 6

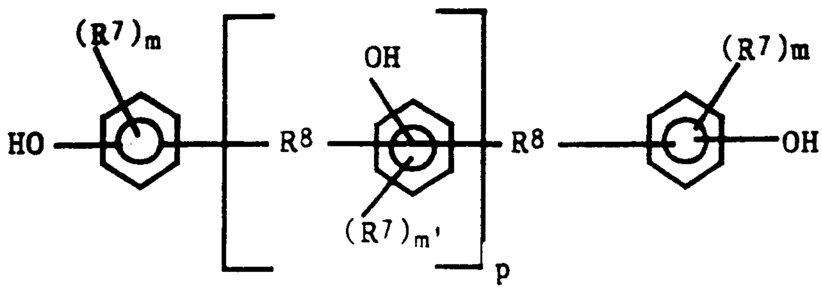 7

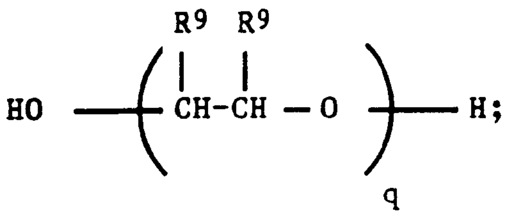 8

wherein:

$R^6$ is independently in each occurrence $C_{1-10}$ alkylene, $C_{1-10}$ haloalkylene, $C_{4-10}$ cycloalkylene, carbonyl, sulfonyl, sulfinyl, oxygen, sulfur, a direct bond or a moiety corresponding to the formula

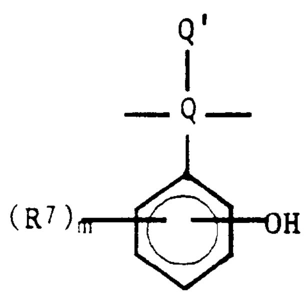

$R^7$ is independently in each occurrence $C_{1-3}$ alkyl or a halogen;

$R^8$ is independently in each occurrence $C_{1-10}$ alkylene or $C_{5-50}$ cycloalkylene;

$R^9$ is independently in each occurrence hydrogen, methyl, halomethyl, or ethyl, with the proviso that only one $R^4$ on an ethylene unit can be methyl, halomethyl or ethyl;

Q is independently in each occurrence a $C_{1-10}$ hydrocarbyl moiety;

Q′ is independently in each occurrence hydrogen, cyano, or a $C_{1-14}$ alkyl group;

m is independently in each occurrence an integer of 0 to 4;

m′ is independently in each occurrence an integer of from 0 to 3;

p is a positive real number of 0 to 10;

q is a positive real number of 1 to 80.

$R^6$ is preferably $C_{1-3}$ alkylene, $C_{1-3}$ haloalkylene, carbonyl, sulfur, or a direct bond. $R^6$ is more preferably

a direct bond, propylene, or fluorinated propylene (=$C(CF_3)_2$-). $R^6$ is most preferably propylene. $R^7$ is preferably methyl, bromo or chloro; and most preferably methyl or bromo. $R^8$ is preferably $C_{1-3}$ alkylene or polycyclic moiety corresponding to the formula

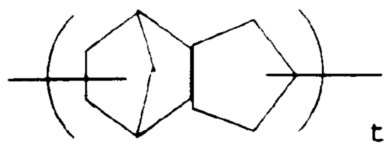

wherein t is an average number of from 1 to 6, preferably of from 1 to 3, most preferably 1. Preferably, m′ is an integer of 0 to 2. Preferably, m is an integer of 0 to 2. Preferably, p is a positive real number of 0 to 8; and more preferably 0 to 4. Preferably, q is a positive real number of 2 to 40, and more preferably of 2 to 20 and most preferably of 5 to 15.

Among preferred polyhydroxy hydrocarbon are the dihydroxy phenols. Preferable dihydroxy phenols include those which contain substituents that are non-reactive with the phenolic groups. Illustrative of such phenols are 2,2-bis(3,5-dibromo-4-hydroxyphenyl) propane; 2,2--bis(4-hydroxyphenyl) propane; 2,2-bis(3,5-dichloro-4--hydroxyphenyl) propane; bis (4-hydroxyphenyl) methane; 1,1-bis(4-hydroxyphenyl)-1-phenyl ethane; 1,1′-bis(2,6--dibromo-3,5-dimethyl-4 hydroxy phenyl) propane; bis (4-hydroxyphenyl) sulfone; bis (4-hydroxyphenyl) sulfide; resorcinol and hydroquinone. The preferred dihydroxy phenolic compounds are 2,2-bis(4-hydroxyphenyl) propane (bisphenol A) and 2,2-bis(4-hydroxy-3,5-dibromophenyl) propane.

Cycloalkylene as used herein refers to monocyclic and polycyclic non-aromatic hydrocarbon moieties. As used herein haloalkyl refers to a compound with a carbon chain and one or more of the hydrogens replaced with a halogen, including compounds wherein all of the hydrogen atoms have been replaced by halogen atoms. Alkylene as used herein refers to a divalent alkyl moiety.

The polyepoxides useful in the invention preferably correspond to Formula 9

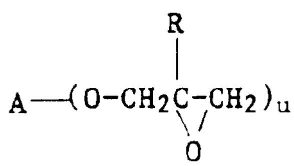

9

wherein A, R, and u are previously defined.

The polyepoxides more preferably correspond to one of Formulas 10 to 13.

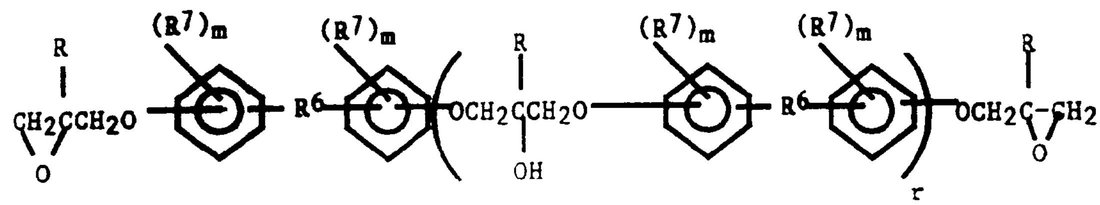

10

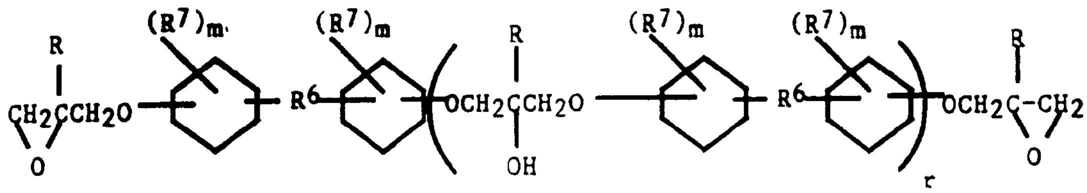

11

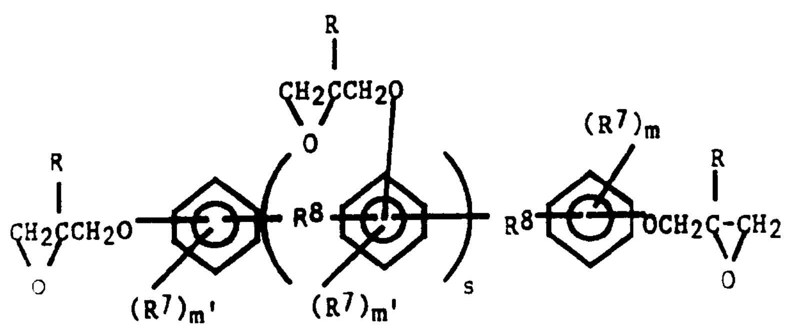

12

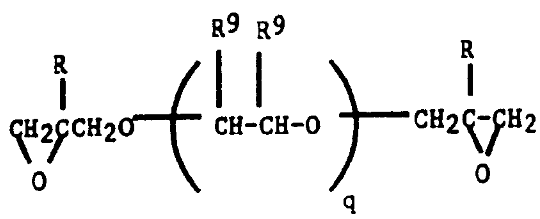

13

wherein $R^6$, $R^7$, $R^8$, $R^9$, m, m' and q are as defined previously; r is a positive real number of 0 to 40; and s is a positive real number of 0 to 10. Preferably, r is a positive real number of 0 to 10, and most preferably 1 to 5. Preferably, s is a positive real number of 0 to 8; and most preferably 1 to 4. All of the variables referred to herein as positive real numbers, that is, p, q, r and s, are average numbers as the compounds referred to contain a distribution of units.

In one embodiment polyepoxides refers to a partially advanced epoxy resin which is the reaction product of one or more polyepoxides, as described previously, with one or more polyhydroxy hydrocarbons or a halogenated derivative thereof. Such polyhydroxy hydrocarbons have been described previously. Alternatively, a polyepoxide can be reacted with a carboxyl substituted hydrocarbon. A carboxyl substituted hydrocarbon is a compound with a hydrocarbon backbone and one or more carboxyl moieties, preferably more than one, and most preferably two. Preferably such compounds correspond to Formula 14;

$$R^{10}(COOH)_v$$

wherein $R^{10}$ is $C_{1-40}$ hydrocarbyl moiety optionally containing oxygen along the backbone,

and v is an integer of one or greater. $R^{10}$ is preferably a $C_{1-40}$ straight or branched chain alkane or alkene, optionally containing oxygen. Preferably v is 1 to 4, and most preferably 2. Fatty acids and fatty acid dimers are among the useful carboxylic acid substituted hydrocarbons. Included in the fatty acids are caproic acid, caprylic acid, capric acid, octanoic acid, versatic acid, decanoic acid, lauric acid, myristic acid, palmitic acid, stearic acid, palmitoleic acid, oleic acid, linoleic acid, linolenic acid, erucic acid, pentadecanoic acid, margaric acid and arachidic acid.

In one preferred embodiment a one or more polyhydroxy hydrocarbons or halogenated derivatives thereof and one or more carboxyl substituted hydrocarbons are reacted with the polyglycidyl ether of a polyhydroxy compound or halogenated derivative thereof. Procedures for performing such a reaction are well known in the art. See "The Handbook of Epoxy Resins" by H. Lee and K. Neville (1967) McGraw Hill, New York, and U.S. Patent Nos. 2,633,458; 3,477,990; 3,821,243; 3,907,719; 3,975,397; and 4,071,477. Optionally, a small amount of a monohydroxy substituted hydrocarbon can be included in the reaction mixture.

The advanced epoxy resins of the invention are prepared by reacting a polyepoxide described herein with compounds corresponding to one or both of formulas 1 and 2. Additionally the polyepoxide may be reacted with a compound corresponding to one or both formulas 1 and 2, and a polyhydroxy hydrocarbon. Such a reaction can optionally take place in the presence of an epoxy resin advancement catalyst. Such advancement catalysts are well-known in the art.

The advancement is preferably performed in a manner such that the reaction product has terminal epoxy groups, in particular the equivalents of polyepoxide are greater than the combined equivalents of the amine advancement agents of this invention and any polyhydroxy hydrocarbons present. The preparation of the advanced resins of this invention is similar to the process for preparing the advanced polyepoxides described hereinbefore, with the exception that some or all of the polyhydroxy hydrocarbon is replaced with an amine advancing agent of the invention, or combination thereof.

In another embodiment, an excess of amine advancing agents of the invention may be used such that all or a portion of the terminal groups of the resulting advanced resin are amino moieties. In such embodiment the advanced resin can be used to cure other epoxy resins. In a preferred mode sufficient amine is present to result in a product with substantially all of the end groups being amine moieties, as these are the most useful as curing agents. In this embodiment the ratio of amine equivalents to epoxy equivalents has a practical upper limit of 2.1:1, as above this ratio the presence of a further excess of the amines is unnecessary.

The ratio of equivalents of amine advancing agents of the invention, along with the equivalents from polyhydroxy hydrocarbons to epoxide units is preferably from 0.1:1.0 to 2.1:1.0, and most preferably from 0.5:1 to 0.7:1. Of the advancement agents reacted with the polyepoxide, from 10 to 100 percent of the equivalents present are amine advancing agents of the invention and 0 to 90 percent are polyhydroxy hydrocarbons, more preferably 50 to 100 percent of equivalents of the amines and 0 to 50 percent of equivalents of the polyhydroxy hydrocarbons, most preferably 90 to 100 percent of equivalents of the amines, and 0 to 10 percent of equivalents of the polyhydroxy hydrocarbons. The reaction mixture which is used to prepare the advanced epoxy resins of this invention may further comprise other components which are commonly reacted into the backbone of an advanced epoxy resin, for example dimeric and trimeric fatty acids and polyalkylene glycols. The amounts of such additional ingredients used depend upon the final properties desired, and those skilled in the art are familiar with preferred amounts of the ingredients.

Catalysts which may be employed to facilitate reaction of the polyepoxide compound with the amines and polyhydroxy compound are those known to those skilled in the art for the reaction of epoxy moieties with active hydrogen containing compounds. Examples of useful catalysts include zinc carboxylate, organozinc chelate compounds, trialkyl aluminum, quaternary phosphonium and ammonium salts, tertiary amines and imidazole compounds. The preferred catalysts are imidazole compounds. Particularly, preferred catalysts are 2-phenyl imidazole 2-methyl imidazole, 1-methyl imidazole, 2-ethyl-4-methyl imidazole and 4,4′-methylene-bis(2-ethyl-4-methyl imidazole). The catalyst is generally employed in an amount of from 0.01 to 2, preferably 0.02 to 1, most preferably 0.02 to 0.1 weight percent based on the combined weight of the polyepoxide compound, amine and polyhydroxy hydrocarbon used.

The polyepoxide, amine, and optionally polyhydroxy hydrocarbon may be reacted in the presence of a solvent or neat, in the absence of a solvent. Solvents which may be used are those which are typically used as solvents for epoxy advancement reactions. Included among preferred solvents are aromatic hydrocarbons, mixtures of aromatic hydrocarbons, alkanols, glycol ethers and ketones. A reaction in solvent may be advantageous wherein heat control is desired as the presence of a solvent allows better heat control of the reaction.

The advancement reaction is preferably performed at a temperature of 80°C or above, as below 80°C the reaction time is too slow. Preferably the reaction is performed at a temperature of 230°C or less, the polymer reacts too fast above such temperature and unwanted colors may be formed due to the presence of oxidated

by-products. More preferably the upper limit on reaction temperature is 150°C or below. The temperature which may be used for the reaction depends on whether or not a solvent is used, and its nature.

The polyepoxide advancement reaction is allowed to proceed for a time sufficient to result in substantially complete reaction of the amine, and polyhydroxy hydrocarbon if present, with the advanced polyepoxide. Preferably, the reaction time is 30 minutes or greater, more preferably 2 hours or greater. Preferably the maximum reaction time is 10 hours or less, more preferably 4 hours or less.

The reaction may be performed via batch process or a continuous addition process. In a batch addition process all of the reactants are charged to a reactor and reacted under the conditions described hereinbefore. Under a continuous addition process, the amine is continuously added to an excess of the polyepoxide, for example in a plug flow type reactor, and the materials reacted as hereinbefore described.

The advanced polyepoxide resins of this invention preferably contain components which correspond to one or both of Formulas 15 and 16

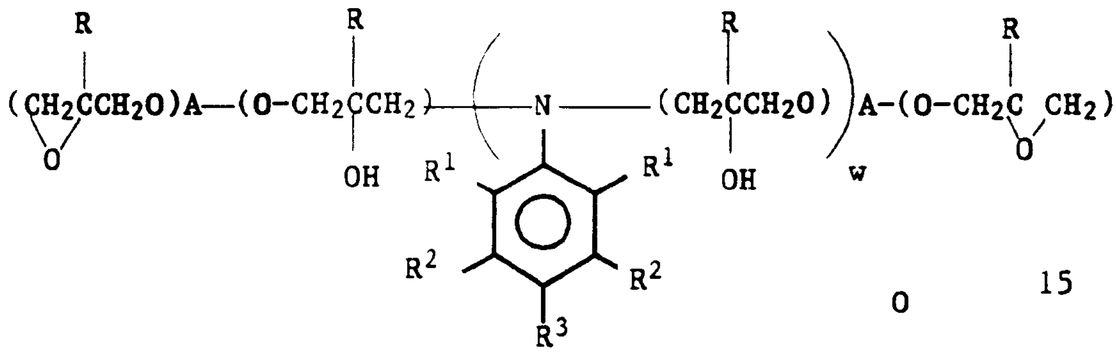

O 15

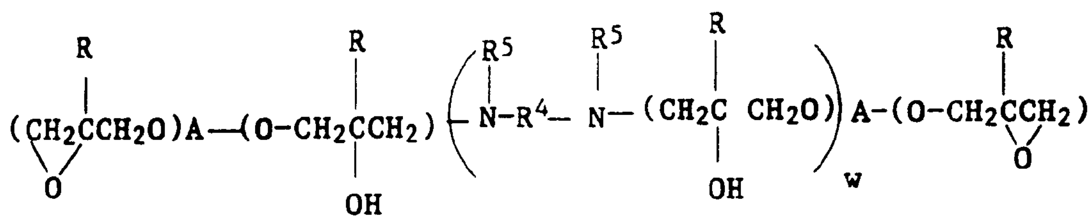

16

wherein A, R, $R^1$, $R^2$, $R^3$, $R^4$ and $R^5$ are as previously defined; and

w is a positive real number of from 0.8 to 16.

Preferably, w is a positive real number of from 1 to 5.2.

The advanced epoxy resins of this invention may be blended with other polyepoxides as described herein. Such blended resins can be used for a variety of coating, encapsulation, and molding uses. Preferably, from 10 to 100 percent by weight of the amine advanced epoxy resins of this invention are blended with 10 to 90 percent by weight of polyepoxides corresponding to Formula 9, with more preferably 70 to 90 percent by weight of amine advance epoxy resins and 10 to 30 percent by weight of polyepoxides corresponding to Formula 9.

The advanced epoxy resins of the invention generally are found in a semi-solid or solid state, and demonstrate a higher melting point than similar epoxy resins advanced with polyhydroxy hydrocarbons, in some instances the melting point is 10°C or greater.

In one embodiment the invention is a water dispersion of the amine advanced resins of this invention. The epoxy resins are advanced in a water dispersion to form amine advanced epoxy resins. The water dispersed advanced epoxy resins comprise:

i) the reaction product of a reaction mixture comprising:

A. a polyepoxide;

B. an advancement agent which corresponds to Formula 1, 2, or 17;

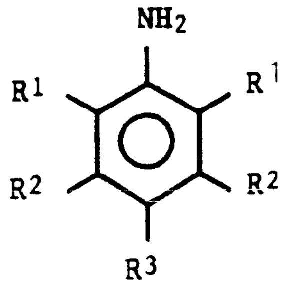

1

$R^5 - NH - R^4 - NH - R^5$ 2

$R^{11} - NH_2$ 17

C. optionally, a catalyst for the reaction of the polyepoxide with the advancement agent; and

D. optionally, a dihydroxy hydrocarbon, or a halogenated dihydroxy hydrocarbon;

ii) a dispersant capable of dispersing the components A, B, C and D in water present in sufficient amount to disperse the composition in water;

iii) optionally, a coupling solvent; and

iv) water;

wherein $R^1$, $R^2$, $R^3$, $R^4$ and $R^5$ are as previously defined; and

$R^{11}$ is independently in each occurrence a $C_{4-20}$ straight or branched chain alkyl moiety, or a hydroxy substituted $C_{4-20}$ straight or branched chain alkyl moiety.

Preferably the solids level (amount of components i), ii) and iii)) in the water dispersion is from 15 to 70 percent by weight, and more preferably from 65 to 70 percent by weight. The dispersant is present in a sufficient amount to form a stable dispersion of the resin composition in water. The amount of the dispersant needed depends on the nature of the dispersant and the resin dispersed, preferably from 1 to 30 percent by weight based on the advanced resin or its components is used. This dispersant is preferably present in an amount of 4 to 30 percent by weight, more preferably from 4 to 10 percent by weight.

The dispersants useful in this invention are those which are capable of dispersing in water the reactants, that is polyepoxide, advancing agent, optionally polyhydroxy hydrocarbon, optionally halogenated polyhydroxy hydrocarbon and optionally catalysts. Among preferred classes of dispersants are polymers, block copolymers and random copolymers of alkylene oxides, i.e. ethylene oxide, propylene oxide, and butylene oxide, or monoethers thereof wherein one end of the polymer is terminated in a hydrophobic hydrocarbyl moiety. Preferred classes of such dispersants are alkylphenol initiated poly(oxyethylene) ethanols available from The Dow Chemical Company under the trademark Dowfax™; alkylphenol initiated poly(oxypropylene) poly(oxyethylene) ethanols (available from ICI under the trademark Tensiofix™) and block copolymers containing an internal poly(oxypropylene) block and two external poly(oxyethylene) ethanol blocks (available from BASF-Wyandotte under the trademark Pluronics™). In another embodiment the dispersant can be an epoxy amphiphile as described hereinafter. In a preferred embodiment the dispersants correspond to Formulas 18 or 19. More preferably the dispersant corresponds to formula 18.

In one embodiment the preferred dispersants correspond to the formula 18

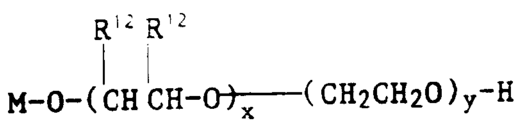

18

M is an alkyl substituted aryl moiety, or a straight or branched saturated or unsaturated $C_{12-36}$ hydrocarbon chain;

$R^{12}$ is hydrogen, methyl or ethyl;

x is a positive real number of from 0 to 95;

and

y is a positive real number from 15 to 100;

with the proviso that for each unit of

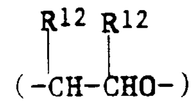

if one $R^{12}$ is ethyl, the other must be hydrogen.

Compounds corresponding to Formula 18 have either a poly(oxyethylene) chain or a poly(oxypropylene)-poly (oxyethylene) chain.

Preferably M is an alkyl substituted aryl moiety; more preferably a $C_{6-12}$ alkyl substituted phenyl, most preferably nonylphenyl. Preferably, M, x and y are chosen such that the H-L-B is from 9 to 16, and most preferably from 9 to 12. Where x is greater than 0, x is preferably 20 to 95. Such dispersant is preferably used in an amount of from 1 to 6 percent by weight, preferably 2 to 4 percent by weight.

In another embodiment the dispersant is an epoxy-amphiphile corresponding to Formula 19

$$B — X — O — (CH_2CH_2O)_n — R^{13} \qquad 19$$

wherein B is the residue of a polyepoxide;

$R^{13}$ is $C_{1-10}$ alkyl moiety; and

X is the residue of a difunctional compound which is capable of reacting with the primary hydroxy moiety of a monoalkylether of a polyethylene glycol and a 1,2 glycidyl ether moiety; and

n is a positive real number such that the composition is emulsifiable in water.

X is a linking group which is the residue of a compound which is capable of reacting with both the primary hydroxy moiety of a monoalkyl ether of a polyethylene glycol, and a 1,2-epoxy moiety of a polyglycidyl ether of a polyhydroxy hydrocarbon. Any compound that has both a moiety reactive with the hydroxy moiety and a moiety reactive with a glycidyl moiety can be used. In a preferred embodiment such a compound is a dicarboxylic acid or anhydride of a dicarboxylic acid. Preferably X is represented by Formula 20

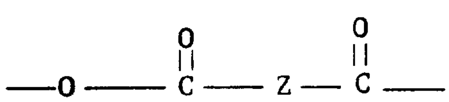

20

wherein Z is a $C_{1-20}$ hydrocarbylene moiety, and the carbonyl moiety is bound to the residue of the poly(oxyethylene) monoalkyl ether. Preferably Z is $C_{1-20}$ alkylene, $C_{3-20}$ cycloalkylene, $C_{4-20}$ alkylene substituted cycloalkylene, $C_{6-20}$ arylene, or $C_{7-20}$ alkyl substituted arylene. More preferably Z is $C_{1-20}$ alkylene, $C_{5-6}$ cycloalkylene, $C_{6-12}$ arylene, $C_{7-20}$ alkylene substituted cycloalkylene or $C_{7-20}$ alkyl substituted arylene. In an even more preferred embodiment Z corresponds to Formulas 21 or 22;

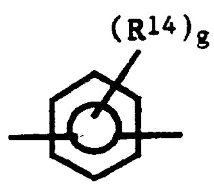

or

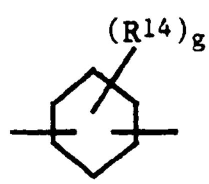

21 22

wherein $R^{14}$ is $C_{1-10}$ alkyl and g is 0 or 1.

Preferably $R^{14}$ is $C_{1-3}$ alkyl, and most preferably methyl.Among preferred anhydrides useful are phthalic anhydride, 1,2,5,6-tetrahydrophthalic anhydride, 3-methylhexahydrophthalic anhydride and 3-ethylhexahydrophthalic anhydride. The anhydrides are preferred over the carboxylic acids, and the cycloaliphatic anhydrides are more preferred as they provide a product which is more stable to hydrolysis than aromatic anhydrides. The 3-alkylhexahydrophthalic anhydrides are the most preferred because of their high stability. 3-methylhexahydrophthalic anhydride is the most readily available.

With respect to Formula 19, $R^{13}$ is preferably a $C_{1-3}$ alkyl group and most preferably a methyl group. With respect to the number of oxyethylene units in the chain, n is selected to render the final advanced resin composition capable of forming a stable emulsion in water. Preferably, n is a positive real number of from 16 to 100,

and more preferably from 16 to 50. This material is prepared by the following process.

In the first step an alkyl monoether of a polyethylene glycol is contacted with a dicarboxylic acid anhydride or dicarboxylic acid in stoichiometric amounts at elevated temperatures with mixing. The contacting is preferably performed in the absence of a solvent, although a solvent may be used. After contacting the reaction mixture is heated to a temperature of from 50°C to 250°C, more preferably from 90°C to 150°C. The actual temperature chosen for this first step is dependent on the choice of linking compound. If a dicarboxylic acid is used, temperatures in the upper end of the above range are preferred, that is 150°C to 250°C; with from 180°C to 220°C being most preferred. If the linking compound is anhydride temperatures in the lower end of the range are preferred, that is from 90°C to 150°C being most preferred. The reaction mixture is heated for a period of from 0.5 to 6 hours, preferably from 1 to 2 hours. It is preferable to perform this reaction under an inert atmosphere, such as nitrogen. The product recovered in nearly quantitative quantities is a poly (oxyethylene) half ester of a dicarboxylic acid (hereinafter half ester).

The product of the first step is thereafter reacted with at least a stoichiometric amount of a polyglycidyl ether of a polyhydroxy hydrocarbon, a halogenated derivate thereof, or an advanced polyglycidyl ether of a polyhydroxy hydrocarbon to prepare the dispersant, preferably in the presence of a suitable catalyst. The contacting is performed at a temperature at which the reaction product of the first step reacts with a 1,2-epoxy moiety (1,2-glycidyl ether moiety). The reaction time is chosen to allow substantially complete reaction of the product from the first step. The reactants are preferably contacted at a temperature of from 80°C to 180°C, more preferably from 120°C to 130°C. The reaction time is preferably from 0.5 to 4 hours, more preferably from 1 to 2 hours. Preferably, this reaction is performed in the presence of an epoxy resin advancement catalyst known to those skilled in the art. Preferable catalysts include ammonium compounds, phosphonium compounds, tertiary amines, or phosphines. Examples of more preferred catalysts include ethyltriphenyl phosphonium, benzyldimethylamine, triphenylphosphine and tributylamine. The catalyst amount used is that amount sufficient to catalyze the reaction. Preferably from 0.01 to 0.5 weight percent is used, and more preferably from 0.05 to 0.15 weight percent is used. If desired the emulsifier can be recovered from the reaction mixture. In one embodiment all the polyepoxide which is to be used in preparing the amine advanced resin of this invention is reacted with the dispersant in a first step to prepare a reaction product. In such an embodiment an excess of polyepoxide is present. Preferably, the excess of polyepoxide is such that the final reaction product contains from 4 to 30 weight percent of compounds corresponding to formula 19. Where an excess of polyepoxide is used the whole mixture can then be subjected to advancement conditions in the presence of the amine advancing agent.

The water dispersed amine advanced resin of this invention is prepared by contacting the polyepoxide, amine, optional polyhydroxy hydrocarbon or halogenated polyhydroxyhydrocarbon, optional catalyst, optional solvent, the dispersant and water. In one embodiment all the reactants except water can be charged to a reactor and water is thereafter added until inversion occurs, i.e. water becomes the continuous phase. The mixture is stirred or agitated until a stable oil in water emulsion is formed. Preferably the contacting occurs from 25°C to 45°C, more preferably 35°C to 40°C. Standard means of stirring or agitating the mixture may be used. The mixture is then heated to a temperature at which advancement occurs, preferably 25°C to 98°C. Preferably the reactants are reacted at 40°C or above and most preferably 60°C or above. Higher temperatures can be used if the mixture is kept under pressure such temperatures are well known to those skilled in the art. Under superatmospheric pressures temperatures at which the water does not volatilize may be used. The reaction mixture is reacted for a time sufficient to achieve the desired epoxy equivalent weight or amine equivalent weight. Preferred reaction times are 30 minutes or greater, more preferably 2 hours or greater. Preferably the maximum reaction time is 10 hours or less, more preferably 4 hours or less. Preferably the amine advanced epoxy resin has an epoxy equivalent weight of 150 or greater, more preferably 175 or greater; and most preferably 200 or greater. Preferably the amine advanced epoxy resin has an epoxy equivalent weight of 45,000 or less, more preferably 7,000 or less, even more preferably 1000 or less and most preferably 650 or less. The dispersions preferably contain amine advanced resin particles with sizes of 1200 Å or greater and more preferably 1500 Å or greater. The dispersion preferably contains amine advanced epoxy resins having particle sizes of 10,000 Å or less and more preferably 5000 Å or less.

In another embodiment the process for preparing the amine advanced epoxy resins in a water dispersion can be performed under conditions such that particle sizes larger than described hereinbefore are prepared. In such embodiment the particles precipitate to the bottom of the reactor and can be easily recovered. These resins can have higher molecular weights than possible to retain such resins in a stable dispersion. Those amine advanced epoxy resins which are prepared such that the particles precipitate can be used in the same manner as the amine advanced epoxy resins prepared without solvent. The stable amine advanced epoxy resin dispersions compositions of this invention can also be used in such applications by removing the water using conventional means to recover the resins. Additionally such amine advanced resins can be used in the stable dispersion form in water based ambient cure coating application, in cathodic electrodeposition coating applications, in paper latexes, in cement dispersions and in other water-based coating applications.

Typically the reaction of polyepoxides with amines results is a highly viscous unprocessable mixture. One solution of this invention is to use amines according to Formulas 1 and 2 to perform the advancement. An additional solution is to perform the advancement in a water dispersion as described herein.

The water dispersed epoxy resins of this invention preferably correspond to Formulas 15, 16 or 23

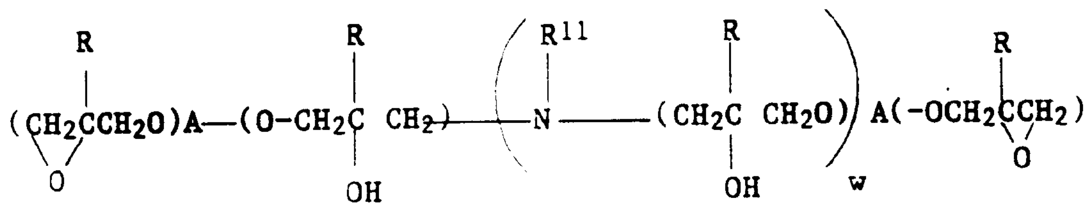

23

wherein A, R, $R^{11}$ and w are as previously defined.

The useful optional coupling solvents include glycol ethers, lower alkanols, n-methypyrrolidone or a solvent which has the capability of reacting with amines, for instance n-butyrolactone or the alkylene carbonates, i.e., propylene carbonate.

The advanced polyepoxides of this invention may be used in coatings. The solid advanced polyepoxides may be flaked or ground according to known processes and combined with epoxy curing agents and exposed to conditions such that continuous films are formed. Processes for preparing such powder coatings are generally well known to those skilled in the art, and such processes may be used with the advanced epoxy resins of the invention.

In another embodiment the advanced polyepoxides of this invention can be used in solvent coatings. In such an embodiment the advanced polyepoxide and a curing agent can be dissolved in a solvent and such mixture can be coated onto a substrate and exposed to curing conditions. Preferred solvents are alkyl substituted benzene, ketones, lower alkanols, glycol ethers, chlorinated alkanes, and dimethyl formamide.

The preferred solids level is from 25 to 80 percent by weight, and preferably from 50 to 75 percent by weight. Generally curing conditions comprise exposing the coated substituted to temperatures from 20°C to 250°C under conditions such that the solvents can be removed from the coating.

The coatings of this invention demonstrate excellent adhesion, resistance to cathodic disbondment, excellent flexibility and impact resistance, good compatibility with a wide variety of resinous binders, such as acrylics, alkyd, polyesters as well as curing agents like polyamines, melamine or phenol resins.

The amine advanced epoxy resin compositions of this invention are cured with known curing agents for epoxy resins. In preparing coatings the amine advanced epoxy resin compositions are contacted with curing agents and then the contacted composition is contacted in a known manner with a substrate such that the amine advanced epoxy resin compositions are cured to form coatings.

Curing agents useful in this invention are those compounds known to the skilled artisan to react with polyepoxides or advanced epoxy resins to form hardened final products and which function to cure the epoxy resin. Included among such useful curing agents are materials which are acidic or alkaline.

The polyhydroxy compounds described hereinbefore wherein the hydroxy moieties are bound to aromatic moieties are among suitable curing agents. The novolac based compounds and the bisphenolic compounds are the preferred polyhydroxy compounds for use as curing agents.

Examples of suitable curing agents include among others, the polybasic acids and their anhydrides, such as, for example the di-, tri- and higher carboxylic acids as oxalic acid, phthalic acid, terphthalic acid, succinic acid, alkyl and alkenyl-substituted succinic acids, tartaric acid, and particularly the polymerized unsaturated acids, such as for example those containing at least 10 carbon atoms, and preferably more than 14 carbon atoms, as for instance dodecenedioic acid, 10,12-eicosadienedioic acid, and anhydrides such as phthalic anhydride, succinic anhydride, maleic anhydride, nadic anhydride (endo-cis-bicyclo-(2,21)-5 heptene 2,3 dicarboxylic anhydride), nadic methyl anhydride, (methyl bicyclo-(2,21) heptene 2,3-dicarboxylic anhydride isomers), ethylene diamine, pyromellitic anhydride and trimellitic anhydride. Other types of acids that are useful are those containing sulfur, nitrogen, phosphorus or halogens.

Other preferred curing agents include the amino-containing compounds, such as, for example, diethylene triamine, triethylene tetramine, dicyandiamide, benzoguanimine, melamine, pyridine, cyclohexylamine, benzyldimethylamine, benzylamine, diethylaniline, triethanolamine, piperidine, tetramethylpiperadine, N,N-dibutyl-1,3-propane diamine, N,N-diethyl-1,3-propane diamine, 1,2-diamino-2--methylpropane. 2,3-diamino-2-methylbutane, 2,3-diamino-2-ethylpentane, 2,4-diamino-2,6--dimethyloctane, dibutylamine, dioctylamine, dinonylamine, distearylamide, diallylamine, dicyclohexylamine, methylethylamine, ethylcyclohexylamine, pyrrolidine, 2-methylpyrrolidine, tetrahydropyridine, 2-methylpiperidine, 2,6-dimethylpiperidine, diaminopyridine and meta-phenylene diamine and soluble adducts of amines and polyepoxides and their salts, such as described in U.S. Patent Nos. 2,651,589 and 2,640,037. Still other examples include the acetone soluble reaction products of polyamines and monoepoxides, the acetone soluble reaction products of polyamines with unsaturated nitriles, such as acrylonitrile, imidazoline compounds as obtained by reacting monocarboxylic acids with polyamines, sulfur and/or phosphorus-containing polyamines as obtained by reacting a mercaptan or phosphine containing active hydrogen with an epoxide halide to form a halohydrin, dehydrochlorinating and then reacting the resulting product with a polyamine, soluble reaction product of polyamines with acrylate, and many other types of reaction products of the amines.

Still other curing agents that may be used include boron trifluoride and complexes of boron trifluoride with amines, ethers and phenols. Friedel--Crafts metals salts, such as aluminum chloride, zinc chloride, and other salts, such as zinc fluorborate, magnesium perchlorate and zinc fluosilicate: inorganic acids and partial esters as phosphoric acid and partial esters as phosphoric acid and partial esters thereof including n-butyl orthothiophosphate, diethyl orthophosphate and hexaethyltetraphosphate.

Another type curing agent to be employed includes the polyamides containing active amino and/or carboxyl groups, and preferably those containing a plurality of amino hydrogen atoms. Examples of polybasic material used in making these polyamides include, among others, 1,10-decanedioic acid, 1,12--dodecanedienedioic acid, 1,20-eicosadienedioic acid, 1,14-tetradecanedioic acid, 1,18-octadecanedioic acid and dimerized and trimerized fatty acids as described above. Amines used in making the polyamides include preferably the aliphatic and cycloaliphatic polyamines as ethylene diamine, diethylene triamine, triethylene tetramine, tetraethylene pentamine, 1,4-diamino-butane, 1,3-diaminobutane, hexamethylene diamine and 3-(N--isopropylamino)propylamine. Especially preferred polyamides are those derived from the aliphatic polyamides containing no more than 12 carbon atoms and polymeric fatty acids obtained by dimerizing and/or trimerizing ethylenically unsaturated fatty acids containing up to 25 carbon atoms. These preferred polyamides have a viscosity between 10 and 750 poises at 40°C, and preferably 20 to 250 poises at 40°C. Preferred polyamides also have amine values of 50 to 450.

Still another group of curing agents are those based on melamine reaction products containing methylol substituents.

Preferred curing agents are the polyamines and amides. More preferred curing agents include aliphatic polyamines, polyglycol diamines, polyoxypropylene diamines, polyoxypropylenetriamines, amidoamines, imidazolines, reactive polyamides, ketimines, araliphatic polyamines (i.e. xylylenediamine), cycloaliphatic amines (i.e. isphoronediamine or diaminocyclohexane) menthane diamine, 3,3-dimethyl-4,4--diamino-dicyclohexylmethane, heterocyclic amines (aninoethyl piperazine), aromatic polyamines, (methylene dianiline), diamino diphenyl sulfone, mannich base, phenalkamine and N,N'N''-tris(6-aminohexyl) melamine. Most preferred are cyanamide, dicyandiamide, and its derivatives, diaminodiphenyl sulfone and methylene dianiline.

The epoxy resin composition of this invention is contacted with sufficient curing agents to cure the resin. Preferably the ratio of (epoxy glycidyl ether) equivalents to equivalents of curing agent is from 0.5:1 and 2:1; more preferably from 0.6:1.4 to 1.4:0.6; even more preferably from 0.8:1.2 to 1.2:0.8 and most preferably from 0.9:1.1 to 1.1:0.9.

Reinforcing materials may be coated with the compositions of this invention, and such materials include any material which would be used by the skilled artisan in formation of composites, prepregs and laminates. Examples of the forms of such materials are cloth, mesh, web or fibers. Preferably, such materials are made from glass, fiberglass, paper, plastics such as aromatic polyamides and graphite. Preferred materials include glass or fiberglass, in cloth or web form. Other additives may also be present including fillers, dyes, pigments, surfactants and flow control agents.

Compositions containing the advanced polyepoxide, curing agent, and catalyst may be contacted with, a reinforcing material in any method known to those skilled in the art. Examples of such contacting methods include powder coating, spray coating and contacting the reinforcing material with a bath containing the composition. In a preferred embodiment the reinforcing material is contacted with the composition in a bath. Preferably the bath contains a solids levels of from 50 to 75 percent solids. In such a bath the various components of the epoxy resin compositions are dissolved or suspended in the bath. A single solvent may be used for the bath, but in many applications a separate solvent is used for each component added to the mixture. It is preferable that the various solvents used be miscible with one another. Such solvents or diluents include those which are volatile and escape from the composition prior to cure. Preferred solvents for the epoxy resins are ketones, including acetone and methylethylketone. Preferred solvents for the curing agents are slightly polar solvents,

amides, e.g. DMF, ether alcohols, e.g., methyl, ethyl, propyl or butyl ethers of ethylene glycol, diethylene glycol, propylene glycol or dipropylene glycol, for example ethylene glycol monomethyl ether and 1 methoxy, 2-propanol. The catalysts are preferably dissolved in polar solvents, in particular alcohols, preferably lower alkanols and most preferably methanol.

In one embodiment, the invention is a process for preparing prepregs from the resin composition and the reinforcing material. Such process comprises contacting the reinforcing material with an intimately mixed bath comprising: an advanced resin in a solvent; a curing agent for the advanced epoxy resin in a solvent; and a compound which catalyzes the curing of the polyepoxide with the curing agent in a polar solvent. The coating occurs under conditions such that the reinforcing material is coated with advanced resin, curing agent, and catalyst. Thereafter the coated reinforcing materials are passed through a heated zone at a temperature sufficient to cause the solvents to evaporate, but below the temperature which the advanced resin undergoes significant cure during the residence time in the heated zone. The reinforcing material preferably has a residence time in the bath of from 0.1 minutes to 10 minutes, more preferably from 0.3 minutes to 8 minutes, and most preferably from 0.5 minutes to 3 minutes. The temperature of such a bath is preferably from 0°C to 100°C, more preferably from 10°C to 40°C and most preferably from 15°C to 30°C. The residence time of the coated reinforcing material in the heated zone is from 0.5 to 15 minutes more preferably from 1 to 10 minutes and most preferably from 1.5 to 5 minutes. The temperature of such zone is sufficient to cause any solvents remaining to volatilize away yet not so high as to result in a complete curing of the components. Preferable temperatures of such zone are from 80°C to 230°C, more preferably from 100°C to 200°C, and most preferably from 140°C to 190°C. Preferably there is some means in the heated zone to remove the solvent, either by passing an inert gas through the oven, or drawing a slight vacuum on the oven. In many embodiments the coated materials are exposed to zones of increasing temperature. The first zones are designed to cause the solvent to volatilize so it can be removed. The later zones are designed to result in partial cure of the advanced resin, i.e. so called B-staging.

In some embodiments the coated reinforcing material may be then transported to another location for further processing, or alternatively the material may be further processed immediately after solvent removal. In such further processing, several serpents or parts of the coated reinforcing material are brought in contact with one another. Thereafter, the contacted parts are exposed to elevated pressures and temperatures sufficient to cause the epoxy resin to cure wherein the resin on adjacent parts react to form a continuous epoxy resin matrix which surrounds the reinforcing material. Before being cured the parts may be cut and stacked or folded and stacked into a part of desired shape and thickness. The pressures use can be anywhere from 1 to 200 $kg/cm^2$, with from 10 to 100 $kg/cm^2$ being preferred. The temperature used to cure the resin in the parts or laminates, depends upon the particular residence time, pressure used, and resin used. Preferred temperature which may be used are from 100 to 190°C, more preferably from 120°C to 180°C, and most preferably from 140°C to 175°C. The residence times may be anywhere from 30 minutes to 300 minutes more preferably from 45 to 200 minutes and most preferably from 60 to 180 minutes. One embodiment of such a process is known as a continuous process. In such process, the reinforcing material is taken from the oven and appropriately arranged into the desired shape and thickness and pressed at very high temperatures for short times, in particular such high temperatures are from 180°C to 250°C, more preferably from 190°C to 210°C, at times from 1 to 10 minutes and from 2 to 5 minutes. Such high speed pressing allows for the more efficient utilization of processing equipment. In such embodiments the preferred reinforcing material is a glass, web or woven cloth.

In some embodiments it is desirable to subject the laminate or final product to a post cure outside of the press. This step is designed to complete the curing reaction. The post cure is usually performed at from 130°C to 200°C for 20 to 200 minutes. This post cure step may be performed in a vacuum to remove any components which may volatilize.

The advanced epoxy resins of this invention may be used to encapsulate a variety of substrates. In such embodiment the substrate to be encapsulated is contacted with the amine advanced epoxy resin, a suitable curing agent, and optionally a catalyst for the curing reaction and the epoxy resin is cured under conditions such that the substrate is completely surrounded by cured epoxy resin. The substrate may be contacted with the amine advanced epoxy resin, a suitable curing agent, and optionally a catalyst by coating or spraying a composition of the components on to the substrate. Optionally the substrate may be dipped into a bath of the containing such components. Alternatively the coating may be molded about the substrate by placing the substrate in a mold, surrounding the substrate with a composition as described and exposing the composition to curing conditions. Thereafter the coating is cured about the substrate. Methods for such encapsulation are well known to those skilled in the art. Substrates which may be used are well known to those skilled in the art and include metals, electronic chips and circuits.

In another embodiment the invention relates to a film formed from the advanced epoxy resin of the invention and a curing agent. The methods for preparation of such films are well known in the art. Such a composition can be cured on a surface with low surface tension and thereafter removed. Alternatively the composition may

be partially cured to form a processable resin. Thereafter the partially cured resin can be extruded into a film and finally cured by exposure to curing conditions.

In another embodiment the invention is an article coated with the coating compositions of this invention.

The following examples are included for illustrative purposes and are not intended to limit the scope of claims herein. All parts and percentages stated herein are by weight, unless otherwise indicated.

Example 1 - 3,5-xylidine advanced epoxy resin

In a 500 mL flask fitted with a condenser, compressed air driven stirrer and heating mantle as well as a thermocouple, the following ingredients are added: 272 g of liquid epoxy resin glycidyl ether 2,2-bis(4-hydroxyphenyl) propane with an EEW of about 180 and 80 g of xylene.

The contents are heated to 120°C under continuous agitation. When 120°C is reached 48 g of 3,5-xylidine are slowly added (total time ca.25 minutes). A maximum exotherm of 123.3°C is reached. The temperature is held at 120°C to 125°C for 3 hours, then 26.7 g of n-butanol is added. The product is then cooled and bottled. The product has the following properties:

| | |
|---|---|
| EEW: | 548.l solution (411 solids) |
| Viscosity: | 7600 mPa·s (50°C) |
| Solids: | 75 weight percent |
| Color: | light amber |

Example 2 - Solution Coating

The following coating composition is prepared by contacting the following ingredients:

| | |
|---|---|
| Advanced epoxy resin of Example 1 | 54.80 g |
| Xylene | 21.84 g |
| n-Butanol | 5.46 g |
| Flow agent | 0.60 g |
| *D.E.H.™ 14 low molecular weight polyamide | 11.00 g |

*Trademark of The Dow Chemical Company

After the components are mixed, a 30 minute induction time is allowed after which the composition is coated on Bonder 1041 (alkali phosphated steel) panels by means of a draw down bar.

The coatings are left at 22°C/60 percent relative humidity to cure for 7 days. The following properties are obtained:

| | |
|---|---|
| Viscosity of mix: | 570 mPa·s/22°C (Brookfield) |
| Thorough film dry time: | 350 minutes/22°C/60 percent R.H. |
| Appearance: | glossy film |
| Persoz hardness: | 1 day 239 sec |
| | 4 days 255 sec |
| | 7 days 280 sec |
| Total dry film thickness: | |
| | 69 υ |

| | |
|---|---|
| Cross cut adhesion: | 100 percent |
| Erichsen flexibility: | 9.1 mm |
| Impact resistance: | Front : > 160 lb.in |
| | Reverse: > 160 lb.in |

In addition, the film show excellent resistance to water, 10 percent NaOH, xylene, 10 percent HCl and 10 percent $H_2SO_4$ after a contact time of 7 days.

Solvent resistance is measured by rubbing with a 2-pound (0.9 kg) ballpein hammer where the hammer head is covered with gauze and soaked in methyl ethylketone. The number of double-rubs by a push-pull motion until a marring of the coating occurs is observed and recorded.

Chemical resistance is measured by soaking a piece of cotton with the test liquid and placing the soaked cotton on the coating surface. Hardness of the coating is measured before and after exposure in intervals of 1 week. The exposed surface is also checked for visual changes e.g. blister formation, coating lift-off or color change. The soaked cotton on the coating surface is covered with a Petri-dish and sealed with a silicon-grease to avoid evaporation of the test liquid.

The adhesion is determined as follows. The coating is deeply scribed with a razor blade in the shape of a Greek letter lambda or with a commercial set of 10 parallel blades at a distance of 1 mm for each other as specified according to DIN 53151. A piece of cellophane tape is laid over the entire scribed surface with a hard rubber eraser; the tape is removed by pulling rapidly towards the bottom of the test panel.

Reverse/direct impact is determined by the procedure of ASTM D 2794. General application of the formulated coatings on steel panels is done by means of a wire coating bar. For mechanical properties 1 layer (40 micrometers dry) and for chemical resistance and salt spray test 2 layers (120 micrometers dry) are used.

Example 3 - 2,6 Xylidine Advance Resin

In a one-liter flask fitted with a condenser, electromotor driven stirrer and heating mantle as well as a thermocouple the following ingredients are added:

400 g of a liquid epoxy resin (glycidyl ether of 2,2--bis(4-hydroxyphenyl) propane) and 95.8 g of 2,6--xylidine.

The contents are heated to 145°C and the heating mantle is removed. The exotherm peak is allowed to go to 230°C and then the contents are heated at 160°C for another 3 hours. Then the hot contents are poured onto aluminum foil to be cooled overnight. The epoxy equivalent weight is determined to be EEW 755. The product has a viscosity of 56320 mPa·s 122°C and the Mettler Soft. point is 107.7°C. The free 2,6-xylidine content is found to be 99 ppm.

Example 4 - Crosslinked Film from a powder composition

In a coffee bean grinder is placed 75 g of the epoxy 2,6-xylidine addition polymer of Example 3 (EEW 755) and 25 g of phenolic hardener (PHEW 250) D.E.H.™ D.E.H.™ 81 which is the adduct of bisphenol A and the diglycidyl ether of bisphenol A, containing 2.5 percent by weight of a polyacrylate flow additive and the contents are ground for 2 minutes.

A stroke cure plate is heated to 150°C and the gel time of the powder mix is determined to be 4 minutes and 20 seconds. A film of 10 cm long and 5 cm wide is produced on the stroke cure plate with the powder mix at 150°C. One film which is cured at 150°C for 7 minutes demonstrates a Tg of 106.4°C. A second film cured at 150°C for 14 minutes demonstrates a Tg of 113.3°C. In both cases a very flexible film of ca. 280 micrometers thickness is obtained.

The films are insoluble in the major solvents like methylethylketone, methylene chloride, acetone dimethylformamide indicating that full crosslinking occurred.

Example 5

Into a 750 mL plastic cup are placed: 186 g of diglycidyl ether of 2,2-bis(4-hydroxyphenyl propane) (EEW 187), 75 g of N,N′-ditertiary butylethylene diamine, and 7.5 g of nonylphenoxy poly (ethyleneoxy) poly(propyleneoxy) ethanol (MW 2700). The mixture is stirred with an electric driven propeller at 500 rpm. 35 g of water are added at 22°C and stirred for 20 minutes at 1000 rpm. A hot water bath with heating plate is placed underneath the beaker. The water in the bath is kept at 74°C and the contents of the beaker readies 62°C. Within 70 minutes the contents which are stirred at 1000 rpm change from a milky paste, to a bluish colloid and then a clear solution. This solution is kept stirred at 500 rpm at a temperature of 62°C for 2 hours. When the stage is reached that the cone (formed by the stirrer) disappears because of the viscosity increase, 139 g

of water is added in increments over a period of 15 minutes. A dispersion forms. The dispersion forms a continuous film at room temperature and dissolves readily in acetone. Three hours later, the viscosity of the dispersion reaches a high level and another 30 g of water is added to render the dispersion more fluid (solids content ca.60 percent). After 7 hours reaction time at 60°C, the pasty dispersion is diluted to ca. 50 percent solids with the addition of ca. 100 g of water over a period of 20 minutes.

The dispersion in a bottle is placed into an oven at 40°C for 3 days to check the stability of the dispersion. The dispersion is still very fluid (viscosity below 200 mPa·s/25°C) and it forms a powdery film at R.T. The powder fuses to a continuous film at 100°C and dissolves readily in acetone. The EEW of the resin is 2000.

Example 6

Into a one-liter glass beaker the following ingredients are placed:

279.0 g diglycidylether of bisphenol A (EEw 182-192) D.E.R.™ 331 (trademark of The Dow Chemical Company)
63.5 g N,N' ditertiary butylethylene diamine
10.4 g Tensiofix™ DW 900 a non-ionic surfactant of nonylphenoxy poly(propyleneoxy) poly(ethyleneoxy) ethanol (MW about 2700).

The mixture is stirred for 15 minutes while the water bath is heated to 80°C. Then 38.0 g of water is added to the clear mixture and stirred at 1000 rpm for 10 minutes. The stirrer speed is reduced to 500 rpm and maintained throughout the reaction. The mixture is allowed to react at 75°C for 6 hours until an EEW of 420 is reached. The mixtures changes from an emulsion of coarse particle size to a colloid and then becomes clear at EEW 390. At EEW 420 100 g of water is added incrementally over 30 minutes. The pulpy dispersion is allowed to stir for 15 minutes and the heater is switched off. Another 97 g of water is added over 10 minutes. A fluid dispersion at 60 percent solids content is formed having a viscosity of 190 mPa·s at a temperature of 25°C. A powdery film forms at room temperature which fused into a continuous film at 100°C. The powder dissolves readily in acetone.

Example 7

In a round-bottom flask equipped with a Schlenk adaptor and a condenser are introduced 200 grams (0.1 mole) of a methyl ether of a polyethyleneoxide glycol of a molecular weight of 2000 (n=44.7) available from FLUKA, and 16.8 grams (0,1 mole) of 4-methylhexahydrophthalic anhydride (MW 168, d 1.159, available from Huels AG). The reactants are heated for two hours at 110°C to 120°C. A half ester of the methylether of polyethyleneoxide glycol (n=44.7) corresponding to the formula

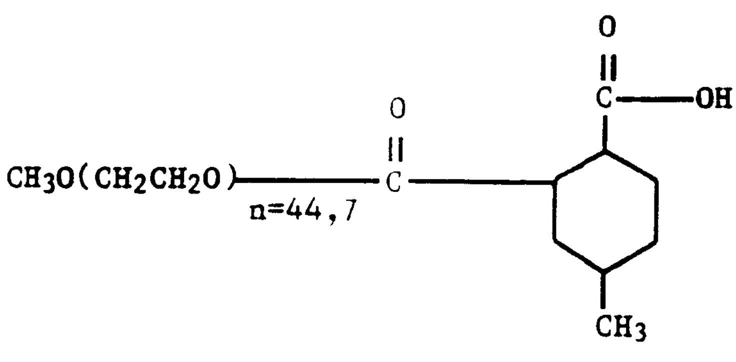

is recovered in quantitative yields.

In a stainless steel reactor are introduced 3365 g of a diglycidyl ether of bisphenol A (EEW 182-192), 365 g of a dimeric fatty acid (dimerized linseed oil fatty acid, PRIPOL™ 1022, MW = 600 available from Henkel); 690 g of a diglycidyl ether of polypropyleneoxide (MW 690); 580 g of bisphenol A and 8.2 g of an ethyl triphenyl phosphonium acetate solution (7 percent catalyst). The mixture is heated to 150°C and an exotherm occurs to 180°C. The final product hereinafter referred to as Resin A has an EEW of 350, and an epoxy resin percent of 12.27. The reaction product is cooled to 90°C and removed from the reactor.

690 g of epoxy resin prepared in this example are placed into a one-liter reactor fitted with a stirrer and a condenser. 76.7 g of the half ester prepared in this example and 0.2 g of an ethyl triphenyl phosphoniun acetate solution (7 percent catalyst) are added to the reactor. A reaction is carried out at 100°C for 90 minutes. The

final acid content is less than 0.05 percent and EEW is 391. Then 42.5 g of isopropanol and 42.5 g of methoxypropanolis added to the resin and the mixture is allowed to stir until homogeneous. This is referred to hereinafter as Resin B which contains an internal dispersant according to formula 19.

In a one-liter flask fitted with a condenser, stirrer (driven with an electric motor) and a heating mantle the following is placed:

290.0 g of Resin B which is heated to 40°C. 190 g of deionized water is added incrementally over a period of 30 minutes. The product has at this stage a relatively high viscosity and needs to be stirred at 400 rpm. Then at 40°C, 14.5 g of 3,5-xylidine are added to the dispersion and the temperature is allowed to rise to 60°C. After the reaction mix is stirred for 10 minutes at 60°C the viscosity of the reaction product drops and the stirrer speed is reduced to 200 rpm. After 2 hours reaction at 60°C, the dispersion is cooled to 20°C and transferred into a glass bottle. The dispersion has the following properties: pH 7, viscosity 1030 mPa·s at 23°C and a solids content of 56 percent dispersion. The dispersion is dried in the oven overnight at 105°C to allow measurement of the solids content of a sample.

A dispersion of the amine advanced resin prepared in this example is mixed with a blend of a reactive polyamide (D.E.H.™ 14 available from The Dow Chemical Company) and Isophorondiamine at a weight ratio of 80:20 (hereinafter referred to as hardener). This blend is diluted with xylene to 90 percent solids content. The weight ratio based on dry material between the advanced amine resin and hardener is 75/25.

Bonder plates are coated with 200 micrometer wet film of the dispersion formed. The film is cured 7 days at room temperature and 10 minutes at 80°C. The tests listed in Table I are performed after 7 days unless otherwise noted. The results are listed in Table I.

Table I

| Properties | Curing at 10 min. 80°C | Room temperature |
|---|---|---|
| Coating thickness (micrometer) | 56 | 56 |
| gloss (%) | 87 | 99 |
| Pendulum hardness by Persoz (sec) | 210 | 243 |
| Erichsen cup flexibility (mm) | 7.5 | 8.6 |
| adhesion | good | good |
| front impact (lb*inch) | 80 | 136 |
| reverse impact (lb*inch) | 96 | 108 |
| MEK, double rubs | 50 | |
| after 3 days | | 9 |
| after 4 days | | 22 |
| after 5 days | | 32 |
| after 6 days | | 35 |
| after 7 days | | 42 |

Example 8

Into a one-liter flask fitted with a condenser, stirrer attached to an electric motor and a heating mantle are placed 290.0 g of resin B which is heated to 40°C. 230 g of deionized water is added incrementally with stirring over a period of 30 minutes. The dispersion has a high viscosity. Then at 40°C, 10 g of n-hexylamine are added

to the dispersion and the temperature is allowed to rise to 60°C. At 50°C an exotherm is noted. As the contents reaches 60°C a viscosity drop is noticed and the dispersion becomes fluid. After 1 hour reaction time at 60°C, the reaction contents are allowed to cool to 20°C and are transferred into a bottle. The dispersion has a pH 8, percent solids of 52 and viscosity of 350 mPa·s at 23°C.

A portion of the dispersion is allowed to dry at room temperature on a glass plate to furnish a very glossy continuous film. A portion of the dispersion is baked at 80°C for 10 minutes. The resulting film becomes hydrophobic and cannot be flushed away with water. The dispersion is analyzed for free amine and is found to contain less than 50 ppm n-hexylamine. A film is prepared using the same hardener as described under Example 7 and the same properties are found.

Example 9

790 g of resin B are heated to 40°C in an apparatus as described in Example 7. 145.0 g of deionized water are added incrementally over a period of 25 minutes, and 3.4 g of 3,5-xylidine are added. The content is allowed to react for 2 hours at 60°C. A sample is removed for analysis and the viscosity of the sample is 5000 mPa·s at 23°C at 61 percent solids and pH 7.

Example 10

Into a one-liter flask fitted with a condenser, thermocouple and heating mantle are placed 277.5 g of a blend of 50 percent diglycidylether of bisphenol A and 50 percent diglycidylester of bisphenol F (D.E.R.™ 351 available from The Dow Chemical Company), 18.66 g of surfactant which is a reaction product between nonylphenol and 40 moles of ethylene oxide (Dowfax™ 9N40 surfactant trademark of The Dow Chemical Co.) and 20.89 g of n-butyrolactone. The contents are heated to 45°C for 45 minutes. 130 g of deionized water is added incrementally over a period of 30 minutes. A dispersion is formed. A drop of the dispersion placed into water does not disperse (balls-up). After the dispersion is heated for 1 hour at 60°C a drop of the dispersion disperses readily in water. The dispersion has a viscosity of ca. 2500 mPa·s at 25°C and a solids content of ca. 76 percent and pH of 6 to 7. The final properties of the dispersion are 300 mPa·s at 25°C, solids content ca. 67 percent and pH 6. Less than 0.01 percent unreacted 3,5-xylidine is found in the dispersion.

Example 11

Into a 500 mL flask fitted with a dropping funnel (250 mL), condenser, thermocouple and heating mantle are placed 148.0 g of meta xylylene diamine, 39.0 g water and 5.0 g Dowfax™ 9N40 surfactant. The contents are stirred until a homogeneous solution is obtained. Then the contents are heated to 70°C under a slight nitrogen purge. 114.1 g of a solution containing 105.5 g of a blend of 50 percent diglycidyl ether of bisphenol A and the diglycidyl ether of bisphenol A and 8.6 g of n-butyrolactone is continuously fed into the mixture at a temperature of 70°C to 80°C over a period of 45 minutes. The reaction mixture is allowed to stir for another 1 hour at 80°C. Then 50 g of benzylalcohol are added and the solution is cooled to 25°C. The contents are transfered into a 500 mL glass bottle. The theoretical amine hydrogen equivalent weight of this hardener solution is 100 and the viscosity 3170 mPa·s at 24°C .

100 g epoxy dispersion of this example and 35.2 g hardener solution of this example are mixed thoroughly. An approximately 150 micrometer wet film is cast onto an alkaliphosphatized steel panel and cured at room temperature. Within 24 hours the film withstands 100 acetone double rubs. After 7 days the films develops the following mechanical properties: Pendulum hardness (Persoz) 224, gloss at 60°C angle 93 percent, adhesion (crosshatch tape method DIN 53151) 100 percent, Erichsen cup flexibility 9.6 mm, front impact (lbs. by inch) 48. The pot life of the mixture is 1 hour.

Example 12

Into a one-liter flask fitted with a condenser, thermocouple and heating mantle the following ingredients are placed 277.5 g of a diglycidylether of bisphenol A, 18.60 g Dowfax™ 9N40 and 20.89 n-butyrolactone. The mixture is heated to 45°C and stirred until homogeneous. 150.0 g of water deionized, is fed incrementally over a period of 25 minutes at 45°C. The dispersion is cooled to 25°C and 117 g of n-octylamine are added. The system develops an exotherm until 100°C and the boiling water keeps the temperature under control. The contents of the flask are allowed to cool to 80°C. 205 g of water, deionized, are added incrementally at 80°C. The suspension is kept at 80°C for 4 hours and then cooled rapidly to 25°C and transferred into a flask. The suspension separated into uniform beads which settled to the bottom of the bottle. The beads had a particle size

of ca. 0.2 mm which fuse into a continuous film at 130°C. The film is extremely tough and flexible with outstanding adhesion to glass and metal.

Example 13

270 g of resin A are placed into a one-liter reactor fitted with a stirrer, dropping funnel (250 ml) and a condenser, and mixed with 30 g of n-butyrolactone with thorough stirring. Then 20.32 g of Dowfax™ 9N40 surfactant is added and the contents are heated to 45°C. The contents are stirred at 45°C until the Dowfax™ 9N40 is fully dissolved. 126 g of water is added incrementally within 40 minutes and the dispersion is stirred for another 15 minutes at 45°C. Then 8.67 g of 3,5-xylidine are added and the contents are reacted at 65°C for 1 hour. The contents of the flask are cooled and transferred into a bottle. The EEW is 450. The solids content is 65 percent ± 1 and the viscosity is 1740 mPa·s at 25°C.

## Claims

**1.** An advanced epoxy resin comprising the reaction product of a reaction mixture comprising:
A. a polyepoxide;
B. an advancement agent which corresponds to a formula selected from the groups of Formulas 1 and 2;

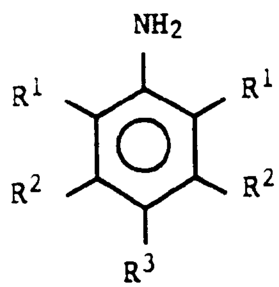

1

$$R^5 - NH - R^4 - NH - R^5 \qquad 2$$

C. optionally, a catalyst for the reaction of the polyepoxide with the advancement agent; and
D. optionally, a dihydroxy hydrocarbon, or a halogenated dihydroxy hydrocarbon; wherein

$R^1$, $R^2$ and $R^3$ are independently in each occurrence hydrogen or a substituent which does not significantly interfere with the reaction of the primary amine with epoxy moieties and which does not catalyze the reaction of an epoxy moiety with another epoxy moiety;

$R^4$ is independently in each occurrence $C_{1-20}$ alkylene, $C_{5-20}$ cycloalkylene, $C_{6-20}$ arylene group, wherein such groups may be optionally substituted with a non-interfering group; and

$R^5$ is independently in each occurrence $C_{3-20}$ secondary or tertiary alkyl $C_{5-20}$ cycloalkyl or $C_{6-20}$ aryl group, wherein such groups may be optionally substituted with a non-interfering group; with the proviso that at least one of $R^1$ must be a non--interfering group, or two of the $R^2$ and $R^3$ designated moieties must be a non-interfering group.

**2.** An epoxy resin composition of Claim 1 wherein:

$R^1$ is independently in each occurrence hydrogen, $C_{1-4}$ alkyl, $C_{1-4}$ alkyloxy, halo or nitro;

$R^2$ is independently in each occurrence hydrogen, $C_{1-8}$ alkyl, $C_{1-8}$ alkyloxy, halo or nitro; and,

$R^3$ is independently in each occurrence hydrogen, $C_{1-8}$ alkyl, $C_{1-8}$ alkyloxy, halo or nitro.

**3.** An epoxy resin composition of Claim 1 wherein

$R^1$ is independently in each occurrence hydrogen, $C_{1-3}$ alkyl, $C_{1-3}$ alkyloxy, bromo, chloro or nitro;

$R^2$ is independently in each occurrence hydrogen, $C_{1-3}$ alkyl, $C_{1-3}$ alkyloxy, bromo, chloro or nitro;

$R^3$ is independently in each occurrence hydrogen, $C_{1-4}$ alkyl, $C_{1-4}$ alkyloxy, bromo, chloro or nitro;

$R^4$ is independently in each occurrence $C_{2-10}$ alkylene, $C_{5-12}$ cycloalkylene, $C_{6-12}$ arylene group optionally substituted with an alkyl, alkoxy, halo or nitro group; and

$R^5$ is independently in each occurrence $C_{4-20}$ tertiary alkyl, $C_{5-12}$ cycloalkyl, $C_{6-20}$ aryl group

optionally substituted with an alkyl, alkoxy, halo or nitro moiety.

4. An epoxy resin composition of Claim 1 wherein:
$R^1$ is independently in each occurrence hydrogen, methyl or bromo;
$R^2$ is independently in each occurrence hydrogen, methyl or bromo;
$R^4$ is independently in each occurrence $C_{2-10}$ alkylene, $C_{5-12}$ cycloalkylene or $C_{6-12}$ arylene group optionally substituted with an alkyl, alkoxy, halo or nitro group;
$R^5$ is independently in each occurrence $C_{4-20}$ tertiary alkyl, $C_{5-12}$ cycloalkyl, $C_{6-20}$ aryl group optionnally substituted with an alkyl, alkoxy, halo or nitro group.

5. An epoxy resin composition of Claims 1, 2, 3, or 4 wherein both of $R^1$, or both of $R^2$ are non--interfering substituents.

6. A cured epoxy resin composition which comprises the reaction product of an advanced epoxy resin composition of Claim 1, 2, 3, 4 or 5, with a curing agent for the advanced epoxy resin.

7. A powder coating comprising a cured epoxy resin composition of Claim 6.

8. A film comprising a cured epoxy resin composition of Claim 7.

9. An article coated with a composition according to one of Claims 5 or 6.

10. A water dispersed advanced epoxy resin comprising
(i) the reaction product of a reaction mixture comprising:
A. a polyepoxide;
B. an advancement agent which corresponds to formula 1, 2, or 17;

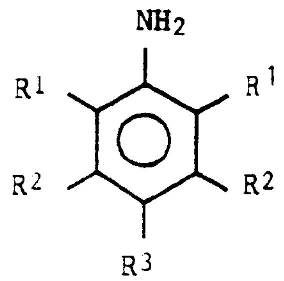
1

$$R^5 - NH - R^4 - NH - R^5 \qquad 2$$
$$R^{11}\text{-}NH_2 \qquad 17$$

C.optionally, a catalyst for the reaction of the polyepoxide with the advancement agent; and
D. optionally, a dihydroxy hydrocarbon, or a halogenated dihydroxy hydrocarbon;
ii) a dispersant present in sufficient amount to disperse the composition in water;
iii) optionally, a coupling solvent; and
iv) water; wherein
$R^1$, $R^2$ and $R^3$ are independently in each occurrence hydrogen or a substituent which does not significantly interfere with the reaction of the primary amine with epoxy moieties and which does not catalyze the reaction of an epoxy moiety with another epoxy moiety,
$R^4$ is independently in each occurrence $C_{1-20}$ alkylene, $C_{5-20}$ cycloalkylene, $C_{6-20}$ arylene, wherein such groups may be optionally substituted with a non-interfering group;
$R^5$ is independently in each occurrence $C_{3-20}$ secondary or tertiary alkyl $C_{5-20}$ cycloalkyl or $C_{6-20}$ aryl group, wherein such groups may be optionally substituted with a non-interfering group; and
$R^{11}$ is a $C_{4-20}$ straight or branched chain alkyl moiety, or hydroxy substituted $C_{4-20}$ straight or branched chain alkyl moiety;
with the proviso that at least one of $R^1$ must be a non- interfering group, or two of $R^2$ and $R^3$ must be non-interfering groups.

11. A composition according to Claim 10 wherein the dispersant corresponds to formula 18 or 19

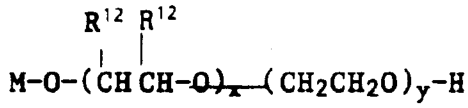

18

$$B — X — O — (CH_2CH_2O)_n — R^{13}$$

19

wherein B is the residue of a polyepoxide;

M is an alkyl substituted aryl moiety, or a straight or branched saturated or unsaturated $C_{12-36}$ hydrocarbon chain;

X is the residue of a difunctional compound which is capable of reacting with the primary hydroxy moiety of a monoalkylether of a polyethylene glycol and a 1,2 glycidyl ether moiety;

$R^{12}$ is hydrogen, methyl or ethyl;

$R^{13}$ is a $C_{1-10}$ alkyl moiety;

x is a positive real number of from 0 to 95;

and

y is a positive real number from 15 to 100;

n is a positive real number such that the composition is emulsifiable in water;

with the proviso that M, x and y are selected such that the surfactant has an H-L-B of from 9 to 16, and a further proviso that for each unit of

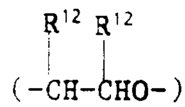

if one $R^{12}$ is ethyl, the other must be hydrogen.

**12.** A composition according to Claim 10 or 11 which comprises 100 parts by weight of the reaction product I. wherein the equivalents ratio of polyepoxide to amine, dihydroxy hydrocarbon, and halogenated dihydroxy hydrocarbon is from 1.0:0.1 to 1.0:2.1; the catalyst is present in an amount of from 0.01 to 2 parts per hundred parts of the reactants A, B and C; II. the dispersant is present in an amount of from 1 to 30 parts per hundred parts by weight of the reaction product I; the coupling solvent is present in an amount of from 1 to 10 parts per hundred parts of the reaction product I, and the total weight percent of components I, II and III is between 15 and 70 percent and the total weight of the water IV is 30 to 85 percent.

**13.** A composition according to Claim 12 wherein the amine corresponds to formula 1 or 2;

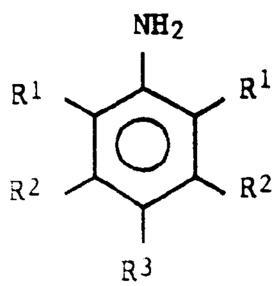

1

$$R^5 - NH - R^4 - NH - R^5 \qquad 2$$

surfactant corresponds to the formula 18

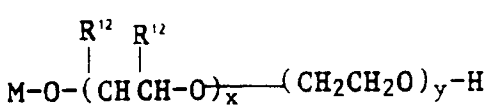

18

wherein $R^1$ , $R^2$ and $R^3$ are independently in each occurrence hydrogen or a substituent which does not significantly interfere with the reaction of the primary amine with epoxy moieties and which does not catalyze the reaction of an epoxy moiety with another epoxy moiety,

$R^4$ is independently in each occurrence $C_{1-20}$ alkylene, $C_{5-20}$ cycloalkylene, $C_{6-20}$ arylene group, wherein such groups map be optionally substituted with a non- interfering group;

$R^5$ is independently in each occurrence $C_{3-20}$ secondary or tertiary alkyl $C_{5-20}$ cycloalkyl or $C_{6-20}$ aryl group, wherein such groups may be optionally substituted with a non-interfering group;

$R^{12}$ is hydrogen, methyl or ethyl;

x is a positive real number of from 0 to 95; and

y is a positive real number from 15 to 100;

with the proviso that M, x and y are selected such that the surfactant has an H-L-B of from 9 to 16, and a further proviso that for each unit of

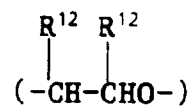

if one $R^{12}$ is ethyl, the other must be hydrogen;

with the further proviso that at least one of $R^1$ must be a non-interfering group, or two of the $R^2$ and $R^3$ designated moieties must be a non-interfering group.

**14.** A process for advancing an epoxy resin in a water dispersion comprising

i) contacting

A.) a polyepoxide

B.) an advancement agent which corresponds to one of the Formulas 1, 2 or 17

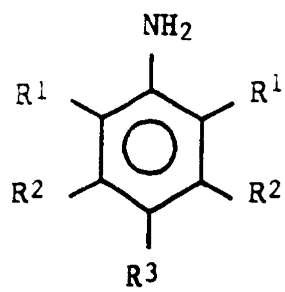

1

$$R^5 - NH - R^4 - NH - R^5 \qquad 2$$

$$R^{11} - NH_2 \qquad 17$$

C.) optionally, a catalyst for the reaction of polyepoxide with the advancement agent;

D.) optionally, a dihydroxy hydrocarbon or a halogenated hydrocarbon;

E.) a dispersant present in sufficient amount to disperse the composition in water;

F.) optionally, a coupling solvent; and

G.) water;

ii) subjecting the mixture to stirring or agitation so as to form an oil in water dispersion;

iii) heating the reaction mixture to a temperature at which the polyepoxide reacts with the amine, and optionally one or more dihydroxy hydrocarbons or halogenated dihydroxy hydrocarbons, for a time sufficient to advance the epoxy resin to the desired epoxy equivalent weight or amine equivalent weight, wherein:

$R^1$, $R^2$ and $R^3$ are independently in each occurrence hydrogen or a substituent which does not significantly interfere with the reaction of the primary amine with epoxy moieties and which does not catalyze the reaction of an epoxy moiety with another epoxy moiety;

$R^4$ is independently in each occurrence $C_{1-20}$ alkylene, $C_{5-20}$ cycloalkylene, $C_{6-20}$ arylene, wherein such groups may be optionally substituted with a non-interfering group;

$R^5$ is independently in each occurrence $C_{3-20}$ secondary or tertiary alkyl $C_{5-20}$ cycloalkyl or $C_{6-20}$ aryl group, wherein such groups may be optionally substituted with a non-interfering group; and

$R^{11}$ is a $C_{4-20}$ straight or branched chain alkyl moiety, or hydroxy substituted $C_{4-20}$ straight or branched chain alkyl moiety;

$R^{13}$ is a $C_{1-20}$ alkyl moiety;

with the proviso that at least one of $R^1$ must be a non-interfering group, or two of the $R^2$ and $R^3$ designated moieties must be a non-interfering group.

**15.** A process according to Claim 14 wherein the dispersant corresponds to formula 18 or 19

$$M-O-(\overset{R^{12}}{\overset{|}{CH}}\overset{R^{12}}{\overset{|}{CH}}-O)_x-(CH_2CH_2O)_y-H \qquad 18$$

$$B-X-O-(CH_2CH_2O)_n-R^{13} \qquad 19$$

wherein B is the residue of a polyepoxide;

M is an alkyl substituted aryl moiety, or a straight or branched saturated or unsaturated $C_{12-36}$ hydrocarbon chain;

X is the residue of a difunctional compound which is capable of reacting with the primary hydroxy moiety of a monoalkylether of a polyethylene glycol and a 1,2 glycidyl ether moiety;

$R^{12}$ is hydrogen, methyl or ethyl;

$R^{13}$ is a $C_{1-10}$ alkyl moiety;

x is a positive real number of from 0 to 95;

and

y is a positive real number from 15 to 100;

n is a positive real number such that the composition is emulsifiable in water;

with the proviso that M, x and y are selected such that the surfactant has an H-L-B of from 9 to 16, and a further proviso that for each unit of

$$(-\overset{R^{12}}{\overset{|}{CH}}-\overset{R^{12}}{\overset{|}{CH}}O-)$$

if one $R^{12}$ is ethyl, the other must be hydrogen.

**16.** A process according to Claim 14 or 15 which comprises 100 parts by weight of the reaction product i) wherein the equivalents ratio of polyepoxide to amine and dihydroxy hydrocarbon and a halogenated dihydroxy hydrocarbon is from 1.0:0.1 to 1.0:2.1; the catalyst is present in an amount of from 0.01 to 2 parts per hundred parts of the reactants A, B and C; the dispersant is II) present in an amount of from 1 to 30 parts per hundred parts by weight of the reaction product; the coupling solvent is present in an amount of from 1 to 10 parts per hundred parts of the reaction product i), and the total weight percent of components i), ii) and ii) is between 15 and 70 percent and the total weight percent of the water iv) is 30 to 85 percent.

**17.** A process according to Claim 14 wherein the reaction temperature is 25 to 98°C, and the reaction time is 30 minutes to 10 hours.

European Patent Office

# EUROPEAN SEARCH REPORT

Application Number

EP 91 31 1698

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 803 508 (FRAUNHOFER-GESELLSCHAFT) * Whole document * --- | 1-10 | C 08 G 59/10<br>C 09 D 163/00<br>C 09 D 5/03 |
| D,X | US-A-3 538 039 (W.L. LANTZ et al.) * Claims; column 5, lines 19-47 * --- | 1-10 | |
| D,X | US-A-3 518 220 (A.J. LANDUA et al.) * Claims; column 5, lines 4-32 * ----- | 1-10 | |
| | | | TECHNICAL FIELDS SEARCHED (Int. Cl.5) |
| | | | C 08 G |

The present search report has been drawn up for all claims

| Place of search | Date of completion of the search | Examiner |
|---|---|---|
| THE HAGUE | 08-05-1992 | DERAEDT G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)